# EUROPEAN PATENT SPECIFICATION

(11) **EP 0 754 502 B1**
(45) Date of publication and mention of the grant of the patent: **04.10.2000**
(21) Application number: 96111389.1
(22) Date of filing: 15.07.1996
(51) Int. Cl.: B09C 1/08, B09C 1/06, A62D 3/00, C22B 43/00

(54) **Method for removing mercury from soil**
Verfahren zur Entfernung von Quecksilber aus Böden
Procédé d'élimination de mercure des sols

(30) Priority: 18.07.1995 JP 20380595
(43) Date of publication of application: 22.01.1997
(73) Proprietor: TAISEI CORPORATION, Shinjuku-ku, Tokyo (JP)
(72) Inventor: Matsuyama, Akito, c/o Taisei Corp., Shinjuku-ku, Tokyo (JP); Higaki, Kanji, c/o Taisei Corp., Shinjuku-ku, Tokyo (JP); Hayasaka, Hiroe, c/o Taisei Corp., Shinjuku-ku, Tokyo (JP)
(74) Representative: Sajda, Wolf E., Dipl.-Phys.

(56) References cited:
- WO-A-94/06946
- DE-A- 4 243 313
- METALLURGICAL TRANSACTIONS B PROCESS METALLURGY., vol. 21B, no. 2, April 1990, NEW YORK US, pages 259-268, XP000134748 A. ROCA: "Study of chloridizing volatilization roasting of cinnabar as a basis for a process to obtain mercuric or mercurous chlorides"

## Description

The present invention relates to a method for removing mercury from soil containing mercury or mercury compounds, including a step of heating the soil to a temperature lower than the boiling point of mercury or the mercury compounds, respectively.

Such a method is known, in principle, from US-A-4 087 276. The document discloses a method for stripping mercury from mercury-containing sludges. In the conventional method, the sludges are first dried and then roasted, wherein all these operations are carried out under a subatmospherical pressure. A final condensation of the vapor phases takes place under superatmospherical pressure.

The document WO 94/06946 discloses a method and an apparatus for removing mercury from contaminated soils and industrial wastes. The removed mercury may be recovered. A furnace vaporizes the mercury containing portion and the vapors are condensed. In an embodiment, an initial heating stage volatilizes water vapor and other volatile contaminants, such as hydrocarbons, with substantial vaporization of the mercury-containing portion; subsequently, a second temperature higher than the first temperature is employed to vaporize the mercury containing portion. In an embodiment, a metallic salt reacts with sulfur in the material to form a stable solid sulfur compound to reduce sulfur content in the gaseous effluent. The addition of a metallic salt may also be employed to react with mercury halides to release elemental mercury therefrom. The contaminated material is thereby converted from one which is hazardous due to mercury contamination to one which is non-hazardous.

The document Metallurgical Transactions B, 21B (1990) April, No. 2, Warrendale, PA, USA, Pages 259 to 268 including the article of A. Roca et al. "Study of Chloridizing Volatilization Roasting of Cinnabar as a Basis for a Process to Obtain Mercuric and Mercurous Chlorides" discloses the addition of FeCl₃ 6H₂O to cinnabar (HgS) containing mineral material in order to chloridize volatilization roast at temperatures lower than required to break down cinnabar.

The document DE-A-4 243 313 discloses a method and an apparatus for decontaminating solid materials loaded with mercury. In the conventional method, the solid materials are at first mechanically treated. Thereafter a dry destillation is carried out at temperatures between 200 °C to 400 °C in an inert atmosphere. The gas stream is introduced into an aqueous alkali polysulfide sulfane solution. In this manner, mercury sulfide is produced which is separated from the said solution.

Mercury-contaminated soil is extremely toxic, and mercury pollution is strictly regulated. However, up to now, no economical method is available that will reliably clean up contaminated soil by methods other than insolubilizing the mercury.

Other conventional methods to remove mercury or mercury compounds from soil include mixing and dispersing the soil in a solution of sodium sulfide in order to convert mercury in the soil into insoluble mercuric sulfide, or flushing with water, or heating at high temperatures in a kiln.

If the mercury level is below a maximum allowable concentration, as stipulated by federal law, mercury-contaminated soil need only be packed under soil. Otherwise, treatment is broadly of two types:
(a) The site of the contamination is enclosed and sealed with water-impermeable sheet plastic or sheet piling and bentonite;
(b) if the soil is highly contaminated and is to be excavated, the soil is to be mixed and dispersed in a solution of sodium sulfide, then buried inside a covered concrete-lined pit.

However, these conventional methods present quite a number of problems in various respects.
- Either method involves insolubilization and sealing, which in practice requires a large amount of human intervention, and raises a health hazard for the workers.
- Enclosing and sealing the site of contamination with water-impermeable sheet plastic or other material still leaves the mercury untouched. Hence, re-contamination is possible with long-term disintegration of the plastic, by shifting and collapse of the ground with earthquakes, or similar disturbances. Moreover, no construction of any kind is allowed on top of such sites.
- When the contaminated soil has been excavated, the ground can be used, but a separate pit to store the contaminated soil is required. Also, human labour is required to manage the pit.
- Flushing with water requires huge amounts of water, and the mercury must be removed from the water.
- Mercury compounds boil at approximately 550 °C. Hence, kiln-treatment requires heating at a temperature between 500 °C to 1 000 °C. This is not only expensive, but also involves the disadvantage that other pollutants could be vaporized and discharged, which makes the required equipment complex and large.

The object underlying the present invention is to facilitate removal of harmful metals, in particular mercury from contaminated soil, in particular mercury-contaminated soil.

This object is solved in an advantageous manner by the method according to the invention as defined in the claims and set forth in the following specification.

According to the invention, a method for removing mercury from soil containing mercury or mercury compounds is disclosed which includes a step of heating the soil to a temperature lower than the boiling point of mercury or the mercury compounds, respectively, and is characterized by the following steps: mixing the soil with a silica mineral and an additive; and heating the mixture obtained thereby to the temperature which is lower than the boiling point of mercury or the mercury compounds, respectively. Further developments of the method according to the invention are specified in the subclaims.

When using the method according to the invention, quite a number of advantages can be achieved due to its effectiveness as follows:
- While conventionally the contaminated soil had to be treated at a temperature in the range from 500 °C to 1 000 °C, it is by the present invention that in removing mercury from soil contaminated with mercury compounds the soil need only be heated to a low temperature in the range from 200 °C to 300 °C, which is considerably below the boiling point of the mercury compounds.
- When using a heating at such a low temperature, only small amounts of other harmful substances are released, if any, in which case the equipment can be comparatively simple and of small scale.
- When heating the soil to a low temperature, very little of the soil itself is modified. Hence, the soil can be re-utilized immediately as biologically active soil.
- According to the invention, mercury and mercury compounds, including stable mercuric sulfide which is usually difficult to remove, are removed and recovered from the contaminated soil. The soil is therefore returned to its original state and can be re-utilized.

The invention will be explained in more detail below with reference to preferred embodiments and the accompanying drawings which are only for the purpose of illustration without limiting the invention.
- Fig. 1: is an overview diagram of the experimental equipment for heating mercury-contaminated soil;
- Fig. 2: is a diagram illustrating the removal ratio of mercury by type of additive;
- Fig. 3: is a graph illustrating the mercury removal ratios with variable amounts of standard sand relative to the mercury concentration;
- Fig. 4: is a graph illustrating the mercury removal ratios with variable amounts of additives relative to the mercury concentration;
- Fig. 5: is a diagram illustrating the mercury removal ratios with variable amounts of standard sand added to leam and sludge;
- Fig. 6: is a diagram illustrating the mercury removal ratios with variable amounts of standard sand added to sludge;
- Fig. 7: is a diagram illustrating the mercury removal ratios with variable amounts of silica sand relative to the mercury concentration; and
- Fig. 8: is a diagram illustrating the mercury removal ratio by type of silica mineral.

### Overview of Methods to Remove Mercury Compounds

Soil contaminated with mercuric sulfide or other mercury compounds is mixed with an additive, then the mixture is heated to a temperature lower than the boiling point of the mercury compound, for example to 200 °C to 300 °C. This treatment will reduce the mercury content in the soil.

For this treatment, if the contaminated soil contains no silica (SiO₂), or contains silica only in very small amounts, then the soil is to be mixed with silica minerals or other forms of silica.

### Additives

Transition metals, magnesium, calcium, zinc, aluminum or respective compounds thereof can be used as additives. Iron, nickel, or manganese are the preferable transition metals, with iron being the most preferable.

Chlorides are the preferable compounds of the transition metals, magnesium, zinc or aluminum. The chlorides of iron or nickel, in particular ferrous chloride (FeCl₂), ferric chloride (FeCl₃), or nickel chloride (NiCl₂) are most preferable.

Should the contaminated soil naturally contain an adequate amount of the active components of an additive, then the addition of further additives is not required.

### Soil

Soil comprises many substances, of which silica is typical. If the soil is primarily composed of sludge or other organic substances, or if it does not contain adequate amounts of silica, then the contaminated soil must be mixed with soil containing silica minerals or other sources of silica, or the silica source itself.

Standard sand, silica sand, or similar type of soil can be used as the silica-containing soil. Reducing the particle diameter of this sand would increase the reaction surface area for better reaction efficiency. Also, crystalline silica is more efficient, for which quartz, chert or orthoclase is preferable.

### Heating of Soil

For heat-treatment of the soil, the perimeter of the contaminated soil is structurally enclosed to create a more airtight environment. Next, using for example a back hoe or other construction equipment, the contaminated soil is excavated. Then, the excavated soil is placed into a rotary kiln or other furnace, and heated to a temperature lower than the boiling point of the mercury compound to be removed, for example to 200 °C to 300 °C.

In so doing, the furnace is maintained at a partial pressure to promote the evaporation of mercury, while taking precaution that mercury vapors so produced will not leak out of the kiln.

### Mixing of Additives

If a rotary kiln is used, one method of mixing in the additive is to place the additive into the kiln simultaneously with the soil, then stirring, mixing and heating. Stirring can be performed by stirring blades pre-set inside the rotary kiln for continuous stirring during heating. This will ensure adequate reaction of the contaminated soil with the additive.

### Collection of Mercury Vapors

Vaporized mercury is dangerous because its airborne absorption ratio is very high. Therefore, all the vaporized mercury must be collected without any leakage outside of the system.

One method is to flash cool the vapors and collect the condensate. Vapors that do not condense are passed through a sulfuric acid solution of potassium permanganate which will decompose and oxidize the mercury. Any mercury vapors still not collected can be adsorbed by activated carbon designed specifically for mercury.

### Equipment for Carrying out the Method

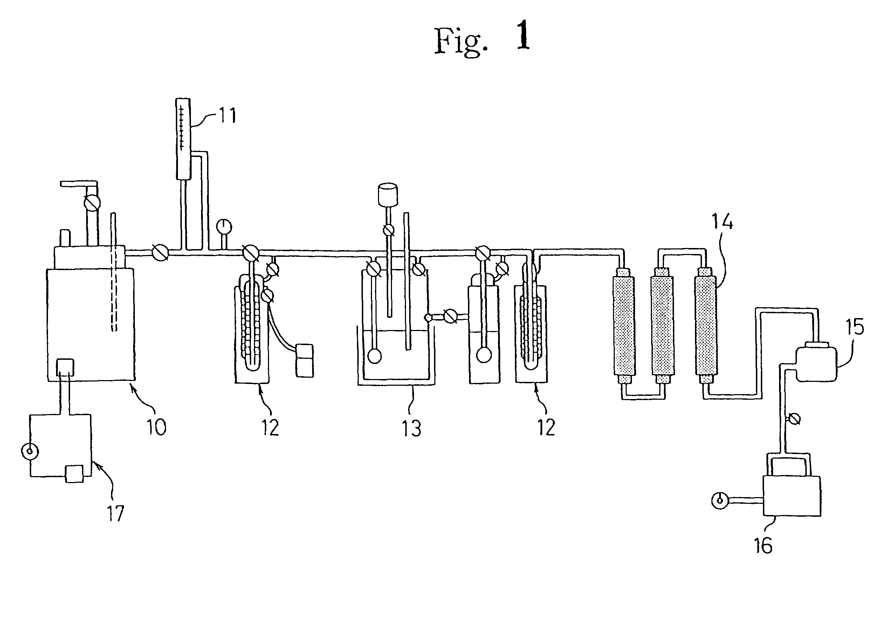

Before giving specific examples of the method according to the invention, the equipment for carrying out the method will be explained with reference to Fig. 1 of the drawings. As shown schematically in Fig. 1, the equipment for the experiments includes a heat reaction vessel 10 in which the contaminated soil is to be heated. The equipment further comprises a flow meter 11, a multi-stage collection equipment for total collection of mercury vaporized from the soil including a mercury vapor scrubber 12, an absorption reactor 13, an activated carbon adsorption column 14, a vacuum vessel 15 and an aspirator 16.

When using such an equipment, contaminated soil is placed into a porcelain crucible, and the crucible and its contents are placed into the heat reaction vessel 10. Then, a suitable voltage is applied from a power source using a slide-back voltage regulator 17 in order to maintain the heat reaction vessel 10 at the required temperature.

The heat reaction vessel 10 is set at a pressure between 96 and 99 kPa (720 to 740 Torr), the heating temperature is set at about 200 °C ± 20 °C, the reaction time is about 2 hours, and the gas flow of gas, including air, evaporated from the substances being treaded inside the heat reaction vessel 10 is set to be between 400 and 500 ml per minute.

Mercury vapors released from the soil under treatment are cooled to 2 °C to 3 °C in the mercury vapor scrubber 12. Virtually all of the vaporized mercury is collected in the waste water collector thereof.

For monitoring the experiments, soil samples taken before and after heating were decomposed by the Akagi wet soil method using a mixture of perchloric acid, nitric acid and sulfuric acid. After decomposition, the samples were appropriately diluted, and the total mercury content was analyzed by flameless atomic absorption spectrophotometry.

### Soil Specimens

Soil specimens are standard sand (Toyoura Standard), loam soil (volcanic clay), and Minamata Bay mercury-contaminated soil (actual measured value of 90 ppm in moist soil, equivalent to 0,45 mg of mercury per 5 g of soil). The loam was air-dried loam which was ground to a uniform particle size of 1 to 2 mm diameter by a conventional method. The properties of these soil specimens are delineated in Table 1 and Table 2 below.

α-HgS (mercuric sulfide) manufactured by Kanto Chemical was used as the mercury source for addition to the soil. Mercuric sulfide is the most stable of all mercury compounds; thus, if mercury can be isolated and removed from mercuric sulfide, it should be possible to isolate and remove mercury from other compounds as well.

**Table 1**

| Properties of Soil Specimens (1) | | | | | | | | | |
|---|---|---|---|---|---|---|---|---|---|
| | Na | Mg | Al | Si | S | K | Ca | Ti | V |
| Standard Sand | 0.966 | | 4.165 | 79.91 | | 6.34 | | 0.51 | |
| Loam | | 4.04 | 27.20 | 33.06 | 0.38 | 1.12 | 0.65 | 2.76 | 0.16 |
| Sludge | 2.93 | 11.58 | 16.73 | 17.15 | 2.37 | 2.00 | 25.75 | 0.50 | |

**Table 2**

| Properties of Soil Specimens (2) | | | | | | | | |
|---|---|---|---|---|---|---|---|---|
| | Mn | Fe | Cl | Zn | Br | Hg | Ru | Moisture Content |
| Standard Sand | | 1.58 | | | | | 6.53 | 0.12 |
| Loam | 0.51 | 30.12 | | | | | | 12.0**) |
| Sludge | 0.85 | 5.75 | 14.12 | 0.11 | 0.09 | 0.07 | | 130.0 |

| | | | | | | | | |
|---|---|---|---|---|---|---|---|---|
| **) Air-dried | | | | | | | | |

In the above Tables 1 and 2, all the figures of the components are percent by weight of the respective soil specimens. In the following, a heat-treatment experiment will be explained using each type of additive.

### Experiment 1

### Types of Additives

Each additive was added to standard sand with a mercury content of 20 mg Hg per 10 g of soil. The additives were:
sodium chloride (NaCl),
magnesium chloride (MgCl₂),
potassium chloride (KCl),
calcium chloride (CaCl₂),
calcium oxide (CaO),
manganese carbonate (MnCO₃),
manganous chloride (MnCl₂),
manganese dioxide (MnO₂),
manganous sulfate (MnSO₄),
iron,
ferric oxide (Fe₂O₃),
ferroferric oxide (Fe₃O₄),
ferrous chloride (FeCl₂),
ferric chloride (FeCl₃),
ferrous sulfate (FeSO₄),
Mohr's salt (ferrous ammonium sulfate Fe(SO₄)·(NH₄)₂SO₄),
ferrous hydroxide (FeO(OH)),
ferrocene (dicyclopentadienyliron Fe(C₅H₅)₂),
nickel chloride (NiCl₂),
nickel oxide (NiO),
zinc chloride (ZnCl₂),
aluminum chloride, anhydrous (AlCl₃),
alumina trihydrate (Al(OH)₃), and
aluminum oxide (Al₂O₃).

The additive concentration was 0.01 mole of the elemental metal in each compound, measured in grams. For example, NaCl has a molecular weight of 58.5, hence 0.59 g of sodium chloride was used. Similarly, 0.95 g of magnesium chloride (molecular weight = 95.22), 0.56 g of iron (atomic weight = 55.85), 0.8 g ferric oxide (molecular weight = 160), 3.92 g of Mohr's salt (molecular weight = 392.14), or 2.44 g of ferrocene (molecular weight = 243.6) was used.

### Results of Experiment 1

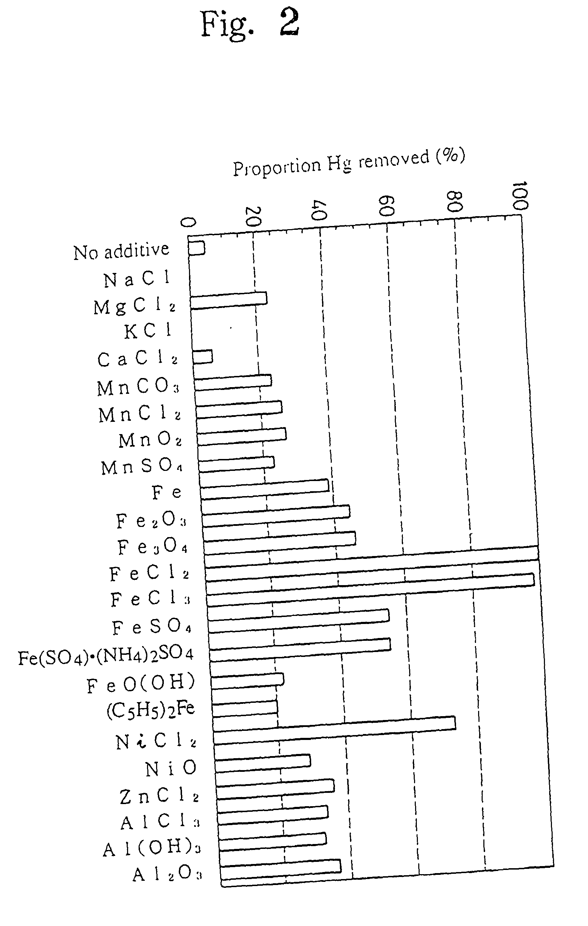

The effectiveness of each additive in removing mercuric sulfide from the test specimens is shown in Fig. 2 of the drawings.

The Experiment 1 showed that - in comparison to control samples without the additional additives - transition metals and the typical elemental metals of magnesium, zinc and aluminum were effective, but overall, the transition elements were more effective, particularly iron and nickel, of which the chloride salts were most effective. Ferrous chloride (FeCl₂) and ferric chloride (FeCl₃) were extremely effective additives, with the initial mercury concentration of 20 mg Hg/10 g of sample being reduced to 0.1 mg or less when heated to a temperature of 200 °C for 2 hours, for an effective removal of mercuric sulfide of 99.7 % and 99.0 %, respectively. Nickel chloride (NiCl₂) also removed 72 % of mercuric sulfide.

In the following, the number of experiments on the catalytic reaction of iron chloride salts is described in detail.

### Experiment 2

### Heat Treatment of Simple Mixture of Ferrous Chloride and Mercuric Sulfide

In Experiment 2, ferrous chloride, an additive, and mercuric sulfide only were mixed without the addition of soil. The amount of additive was the same as in Experiment 1 at 0.01 mole (g), and the initial amount of mercuric sulfide was 20 mg (or 17.4 mg of mercury).

After heating at a temperature of 200 °C for 2 hours, the mercury content was still 16.9 %. There had been virtually no reduction in the mercury content, indicating that mercuric sulfide could not be removed with the addition of an additive only. In using ferrous chloride as the additive, chlorine gas is generated, and the iron is oxidized.

### Experiment 3

### Heat Treatment with Addition of Hydrochloric Acid to Standard Sand

In Experiment 3, the removal of mercuric sulfide was determined for two samples. Sample A comprised 10 g of standard sand mixed with 20 mg of mercuric sulfide, and sample B comprised 10 g of standard sand de-ironized with heat-concentrated hydrochloric acid mixed with 20 mg of mercuric sulfide. The percentage of metals released from standard sand with heat-concentrated hydrochloric acid is shown in Table 3.

**Table 3**

| Amount of Elemental Metals Dissolved from Sand | | | |
|---|---|---|---|
| | Initial Value % by weight | Amount Released % by weight | % released |
| Iron | 1.58 | 0.34 | 21.5 |
| Potassium | 6.34 | 0.006 | 0.08 |
| Calcium | | 0.02 | |
| Magnesium | | 0.025 | |

In this Experiment 3, hydrochloric acid was used as the additive. 5 ml of 1N acid was used to yield an amount of elemental chlorine equivalent to that contained in 0.01 mole (g) of ferrous chloride.

As to the mercury-removal results of this Experiment 3, 93.0 % of the mercuric sulfide was removed from Sample A (standard sand plus hydrochloric acid additive), and 36.0 % was removed from Sample B (de-ironized sand plus hydrochloric acid additive). That is, only about one-third of the mercuric sulfide was removed from de-ironized sand compared with standard sand.

This can be attributed to the fact that hydrochloric acid added to sand yields a mixture of chlorine from the acid and iron from the sand. Therefore, the addition of hydrochloric acid to promote volatilization of mercury simulates the same state in sand as the addition of ferrous chloride. Since the amount of iron in the de-ironized sand has been reduced, the proportion of mercuric sulfide removed has decreased.

### Experiment 4

### Heat Treatment with Variable Amounts of Sand

In Experiment 4, the amount of ferrous chloride additive and mercuric sulfide (23 mg (20 mg as Hg)) was kept constant, while the amount of standard sand was changed in four stages from 1000-fold to 5000-fold.

The standard sand was from Toyoura, for which X-ray analysis showed silica to be the predominant component, and the particle size was uniform with a mean particle diameter of 0.18 mm.

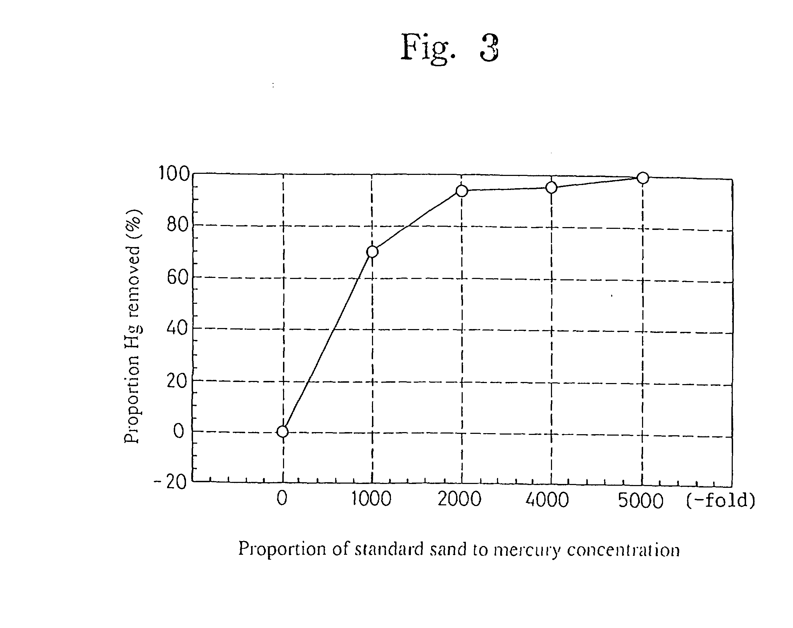

The percentage removal of mercury from variable amounts of standard sand relative to the mercury content are shown in Fig. 3 of the drawings. The results indicate that a 2000-fold ratio of sand to mercury was required for a removal in excess of 90 %.

### Experiment 5

### Heat Treatment with Variable Amounts of Additive

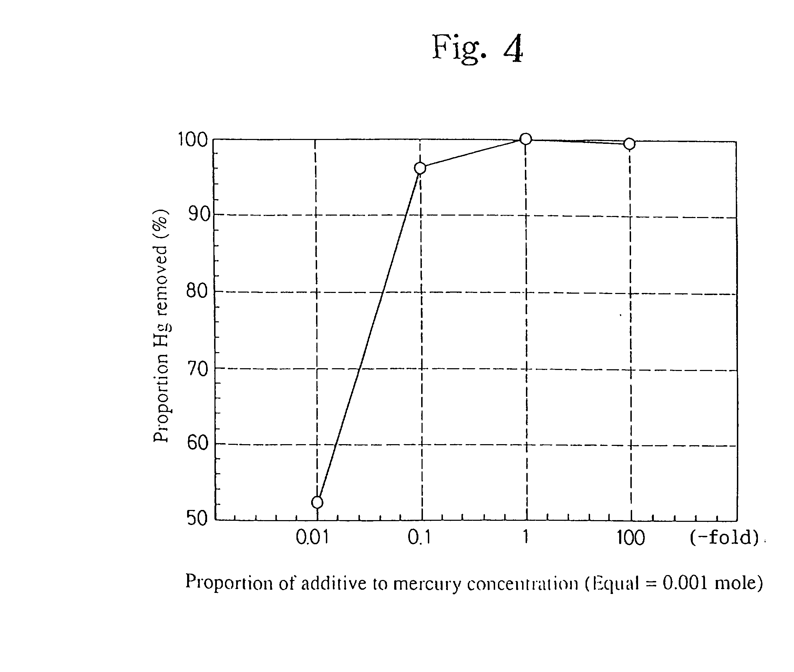

In Experiment 5, the amount of standard sand and mercuric sulfide concentration were kept constant, while the amount of ferrous chloride additive was varied in four stages from 100-times, equal, one-tenth, and one-one hundredth of the mole concentration of mercury. Removal ratios are shown in Fig. 4 of the drawings. These results show that 99.5 % or more of the mercury could be removed by adding ferrous chloride ride additive in amounts at least equal to the mole concentration of mercury, then heating to a temperature of 200 °C for 2 hours. At lower concentrations, the percentage removed decreased, for a maximum 50 % removal at an additive concentration of 1 % of the mole concentration of mercury.

In the following, experiments are described wherein the heat-treatment removal of mercuric sulfide from loam soil and Minamata Bay sludge is explained.

### Experiment 6

### Loam Soil and Minamata Bay Sludge

In Experiment 6, mercuric sulfide was added to loam soil in an amount to produce a final concentration of 20 mg of mercury per 10 g of soil. The concentration of mercury in Minamata Bay sludge was measured as 0.45 mg / 5g of sludge. The amount of ferrous chloride additive was set at 0.01 mole.

The results of Experiment 6 are shown in the following Table 4. The effectiveness of the additive for loam and Minamata sludge were similar to that of standard sand.

**Table 4**

| | Initial Value mg | After Heating mg | Removal % by weight |
|---|---|---|---|
| Loam | 18.5 | 14.0 | 22.2 |
| Sludge | 0.45 | 0.40 | 11.5 |

### Experiments 7 and 8

### Addition of Standard Sand

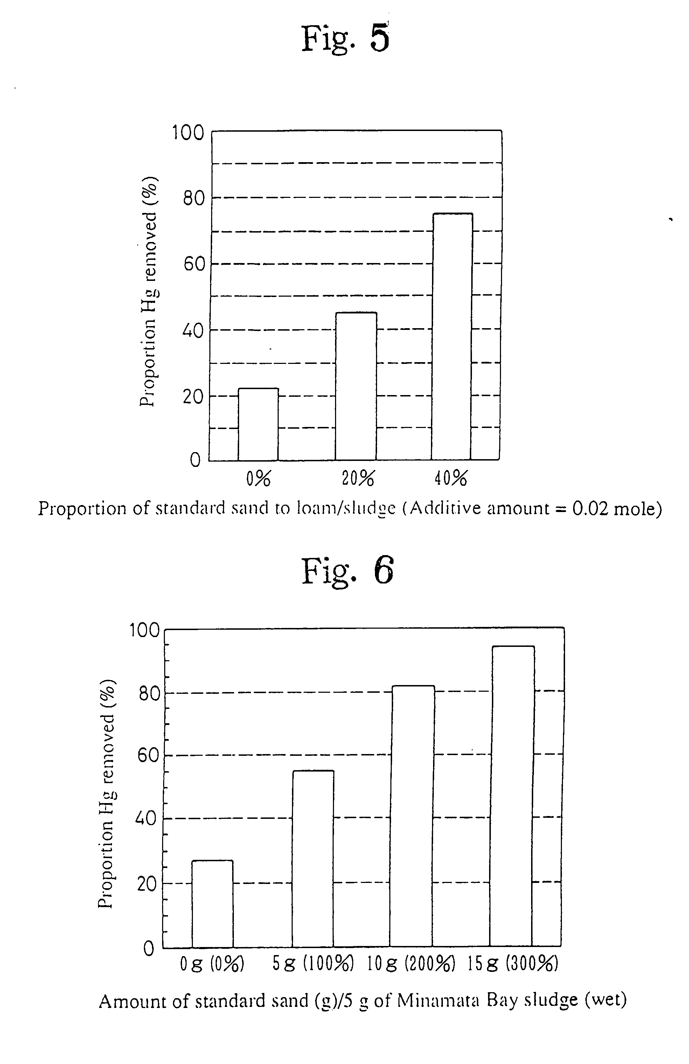

In Experiment 7, the amount of ferrous chloride added to loam and Minamata sludge was increased, and standard sand was also added. The amount of ferrous chloride was set at 0.02 mole, and the amount of standard sand relative to loam was varied from 0 % to 20 % to 40 % and relative to sludge was varied from 0 % to 50 %. Results of Experiment 7 are shown in Fig. 5 of the drawings. The results indicate that the removal of mercuric sulfide increased proportionally to an increase in the amount of standard sand.

In Experiment 8, Toyoura sand was added to Minamata sludge, for which the removal ratios are shown in Fig. 6 of the drawings. Here, 0.01 mole (1.268 g) of ferrous chloride was used. The results of Experiment 8 are shown in Fig. 6 of the drawings. As for Experiment 7, the removal of mercuric sulfide increased proportionally to an increase in the amount of standard sand.

### Experiment 9

### Addition of Standard Sand

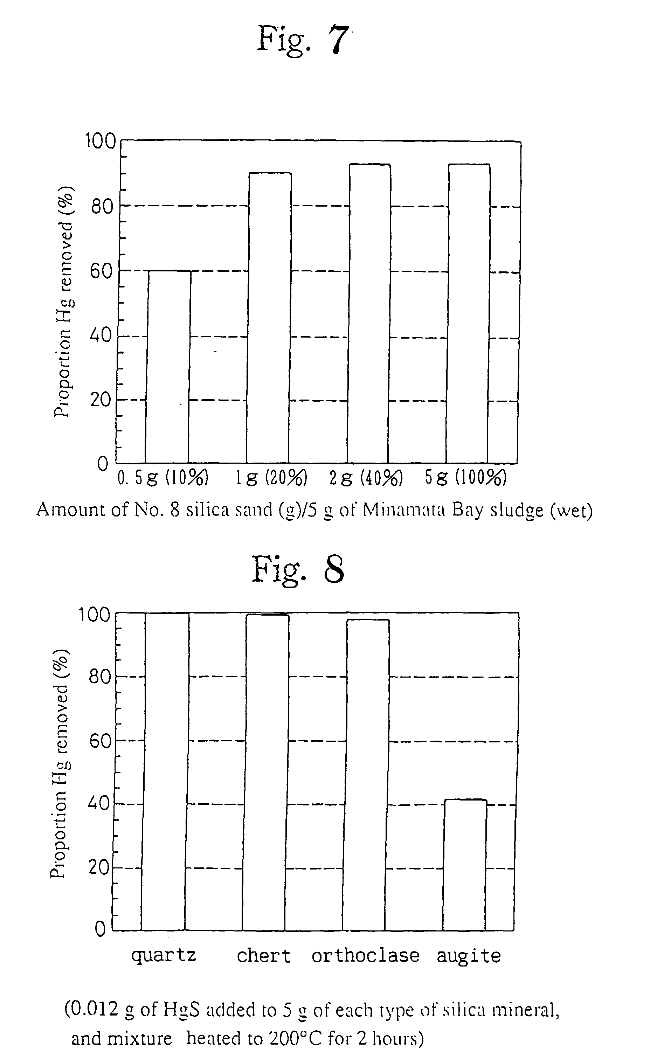

In Experiment 9, No. 8 silica sand, which has a higher concentration of quartz than standard sand, and is of fine particle diameter, was mixed with Minamata sludge. No. 8 silica sand comprises 97 to 99 % quartz. It has a particle diameter of 0.05 to 0.1 mm (compared to 0.1 to 0.3 mm for standard sand) with a resultant 10-fold greater surface area than standard sand. The experimental data of Experiment 9 is shown in Fig. 7. Results indicate that a mercury removal ratio of 95 % was achieved using only 1/10th the amount of silica sand as of standard sand. In other words, vaporization is accelerated in proportion to the reaction area.

In the following, the removal of mercury with silica minerals is explained in connection with the following Experiment 10.

### Experiment 10

### Addition of Silica Minerals

In Experiment 10, the heating and vaporization reaction was conducted on different types of silica minerals, wherein 0.012 g of mercuric sulfide was added to a 5 g sample of each of quartz, chert, orthoclase, and augite. Each mixture was heated to a temperature of 200 °C for 2 hours. The results of Experiment 10 are shown in Fig. 8 of the drawings.

As can be inferred from the indicated results, quartz, chert, and orthoclase were each extremely efficient in removing mercury.

## Claims

1. A method for removing mercury from soil containing mercury or mercury compounds, including a step of heating the soil to a temperature lower than the boiling point of mercury or the mercury compounds, respectively,
characterized by the following steps:
- mixing the soil with a silica mineral and an additive, and
- heating the mixture obtained thereby to the temperature which is lower than the boiling point of mercury or the mercury compounds, respectively.

2. The method according to claim 1,
wherein silica mineral with a very fine particle diameter is used.

3. The method according to claim 1 to 2,
wherein the mixture is heated to a temperature in the range of about 200 °C to 300 °C.

4. The method according to any of claims 1 to 3,
wherein an additive is used which is a transition metal, magnesium, calcium, zinc, or aluminum, or at least one type of compound of these metals.

5. The method according to claim 4,
wherein a compound is used which is a chloride.

6. The method according to any of claims 1 to 5,
wherein ferrous chloride (FeCl₂) and/or ferric chloride (FeCl₃) is used as an additive.

7. The method according to any of claims 1 to 6,
wherein the heating step is carried out under a reduced pressure between 96 and 99 kPa (720 to 740 Torr).

## Patentansprüche

1. Verfahren zum Entfernen von Quecksilber aus dem Erdreich, das Quecksilber oder Quecksilberverbindungen enthält, wobei das Verfahren einen Schritt des Erwärmens des Erdreichs auf eine Temperatur aufweist, die unter dem Siedepunkt von Quecksilber bzw. der Quecksilberverbindungen liegt,
gekennzeichnet durch die folgenden Schritte:
- Vermischen des Erdreichs mit einem Kieselsäuremineral und einem Additiv und
- Erwärmen des dadurch erhaltenen Gemischs auf die Temperatur, die niedriger als der Siedepunkt von Quecksilber bzw. der Quecksilberverbindungen ist.

2. Verfahren nach Anspruch 1,
wobei Kieselsäuremineral mit einem sehr kleinen Teilchendurchmesser verwendet wird.

3. Verfahren nach Anspruch 1 oder 2,
wobei das Gemisch auf eine Temperatur im Bereich von ca. 200 °C bis 300 °C erwärmt wird.

4. Verfahren nach einem der Ansprüche 1 bis 3,
wobei ein Additiv verwendet wird, das ein Übergangsmetall, Magnesium, Calcium, Zink oder Aluminium oder mindestens ein Typ von Verbindungen dieser Metalle ist.

5. Verfahren nach Anspruch 4,
wobei eine Verbindung verwendet wird, die ein Chlorid ist.

6. Verfahren nach einem der Ansprüche 1 bis 5,
wobei Eisen(II)-chlorid (FeCl₂) und/oder Eisen(III)-chlorid (FeCl₃) als Additiv verwendet wird.

7. Verfahren nach einem der Ansprüche 1 bis 6,
wobei der Erwärmungsschritt unter einem reduzierten Druck zwischen 96 und 99 kPa (720 bis 740 Torr) durchgeführt wird.

## Revendications

1. Procédé pour éliminer le mercure de sols contenant du mercure ou des composés du mercure, qui comprend une étape de chauffage du sol jusqu'à une température inférieure au point d'ébullition du mercure ou des composés du mercure, respectivement,
caractérisé par les étapes suivantes :
- mélange du sol avec un minéral de type silice et un additif, et
- chauffage du mélange ainsi obtenu à la température qui est inférieure au point d'ébullition du mercure ou des composés du mercure, respectivement.

2. Procédé suivant la revendication 1, dans lequel il est utilisé un minéral de type silice ayant un diamètre particulaire très petit.

3. Procédé suivant les revendications 1 à 2, dans lequel le mélange est chauffé à une température comprise dans la gamme d'environ 200°C à 300°C.

4. Procédé suivant l'une quelconque des revendications 1 à 3, dans lequel l'additif utilisé est un métal de transition, le magnésium, le calcium, le zinc ou l'aluminium, ou au moins un type de composé de ces métaux.

5. Procédé suivant la revendication 4, dans lequel le composé utilisé est un chlorure.

6. Procédé suivant l'une quelconque des revendications 1 à 5, dans lequel du chlorure ferreux (FeCl₂) et/ou du chlorure ferrique (FeCl₃) sont utilisés comme additif.

7. Procédé suivant l'une quelconque des revendications 1 à 6, dans lequel l'étape de chauffage est réalisée sous une pression réduite comprise entre 96 et 99 kPa (720 et 740 Torr).
